# EUROPÄISCHE PATENTSCHRIFT

(11) **EP 1 443 188 B1**
(45) Veröffentlichungstag und Bekanntmachung des Hinweises auf die Patenterteilung: **02.12.2009**
(21) Anmeldenummer: 04000823.7
(22) Anmeldetag: 16.01.2004
(51) Int. Cl.: F02B 23/10

(54) **Hubkolben-Brennkraftmaschine mit Benzin-Direkteinspritzung**
Reciprocating piston internal combustion engine with gasoline direct injection
Moteur à piston alternatif à combustion interne avec injection directe d'essence

(30) Priorität: 03.02.2003 DE 10304168
(43) Veröffentlichungstag der Anmeldung: 04.08.2004
(73) Patentinhaber: Bayerische Motoren Werke Aktiengesellschaft, 80809 München (DE)
(72) Erfinder: Pater, Piet, 85368 Moosburg (DE); Gartner, Jurij, 82110 Germering (DE); Otten, Reinhold, 82234 Wessling (DE)

(56) Entgegenhaltungen:
- EP-A- 0 909 885
- DE-A1- 19 716 642
- DE-A1- 19 820 085
- US-A- 5 927 245

## Beschreibung

Die Erfindung betrifft eine Hubkolben-Brennkraftmaschine mit Benzindirekteinspritzung gemäß der Merkmale im Oberbegriff des Patentanspruchs 1.

Sie geht von der deutschen Patentschrift DE 197 16 642 aus. In dieser ist ein Mehrzylinder-Ottomotor mit Kraftstoffdirekteinspritzung mit folgenden Merkmalen beschrieben:
- Jeder Zylinder weist zwei Einlass- und zwei Auslassventile auf, wobei deren Kanäle jeweils von einer Ansauganlage gespeist bzw. in eine Abgasanlage eingeleitet werden;
- die Einlassventile sind symmetrisch zu einer durch die Zylinderachse verlaufenden, vorzugsweise senkrecht zur Kurbelwellenachse stehenden Ebene einer ersten Zylinderprojektionshälfte angeordnet;
- die Zündkerze ist in etwa zentrisch zur Zylinderachse angeordnet;
- eines der Einlassventile ist direkt oder indirekt über das Schließen des ihm zugehörigen Einlasskanals abschaltbar;
- zwischen dem stetig öffnenden Einlassventil und dem auf der gegenüberliegenden zweiten Zylinderprojektionshälfte mündenden Auslassventil ist der Abstand größer als zwischen dem Einlassventil für den abschaltbaren Einlasskanal und dem diesen gegenüberliegenden Auslassventil;
- die Einspritzdüse mündet versetzt zur Zylinderachse zwischen dem stetig öffnenden Einlassventil und dem auf der zweiten Zylinderprojektionshälfte gegenüberliegenden Auslassventil in den Brennraum;
- der Brennraum ist einerseits von dem Zylinderkopf und andererseits von dem Kolben begrenzt, wobei der Brennraum in ein zylinderkopfseitiges und ein kolbenseitiges Volumen aufgeteilt ist.

Aufgrund der, in der DE 197 16 642 C2 beschriebenen Ausgestaltung ist es möglich, im Zylinder, bzw. Brennraum sowohl eine Drall- als auch eine Tumbleströmung beim Betrieb der Brennkraftmaschine einzustellen. Diese unterschiedlichen Strömungsvarianten wirken sich positiv auf die Gemischaufbereitung und auf die Verbrennung aus.

Nachteilig an der beschriebenen Ausgestaltung ist der hohe bauliche Aufwand der notwendig ist, um beide Strömungsvarianten im Zylinder, bzw. Brennraum zu realisieren.

Aufgabe der vorliegenden Erfindung ist es, eine bauliche Vereinfachung für eine gattungsgemäße Brennkraftmaschine mit Benzindirekteinspritzung aufzuzeigen.

Diese Aufgabe wird erfindungsgemäß durch die Merkmale im kennzeichnenden Teil des Patentanspruchs 1 gelöst.
Durch die vorgeschlagene Anordnung des Benzineinspritzventils, mindestens einen halben Zylinderradius von der Zündeinrichtung entfernt, ist es möglich, sowohl die Einlassventile als auch die Auslassventile parallel zur Kurbelwellenachse bzw. Brennkraftmaschinenlängsachse auszurichten. Durch diese Maßnahme wird der Aufbau des Ventiltriebs wesentlich vereinfacht, der somit kostengünstiger herzustellen ist. Da üblicherweise auch Hubkolben-Brennkraftmaschinen mit Benzindirekteinspritzung über ein Drosselorgan im Ansaugtrakt, eine Drosselklappe, verfügen, wird diese in Verbindung mit dem zusätzlichen Luftzuführkanal genutzt, um entweder eine Tumble- und/oder eine Drallströmung im Zylinder, bzw. Brennraum zu erzielen. Während bei Volllast und hohen Drehzahlen das Drosselorgan weit geöffnet ist, wird die Ansaugluft primär aus dem Einlasskanal angesaugt. Aufgrund der Einlassventilstellung in Verbindung mit der Ausformung des Einlasskanals, bildet sich im Zylinder, bzw. Brennraum eine Tumbleströmung aus. Werden die Last oder die Drehzahl reduziert, das bedeutet, das Drosselorgan wird zunehmend geschlossen, wird immer mehr Luft über den Luftzuführkanal angesaugt. Dies führt dazu, dass bei geringen Drehzahlen bzw. geringer Last eine Drallströmung im Zylinder, bzw. Brennraum ausgebildet wird. Das aktive An- und Ausschalten eines Einlass-Gaswechselventiles, wie es der Stand der Technik zeigt, kann entfallen. Somit reduziert sich der Aufbau des Ventiltriebes in vorteilhafter Weise nochmals und ein einfacher, konventioneller Ventiltrieb kann für die Hubkolben-Brennkraftmaschine vorgesehen werden. Durch die erfindungsgemäße Ausgestaltung wird in vorteilhafter Weise eine direkteinspritzende Hubkolben-Brennkraftmaschine mit einer Hochleistungs-Brennkraftmaschine kombiniert.

Gemäß der Patentansprüche 2 bis 4 ist der Luftzuführkanal derart ausgelegt, dass er die Ansaugluft in Richtung Ventilspalt leitet. Der Luftzuführkanal wird vorzugsweise in einem Winkel zwischen 45° und 90° zur Brennkraftmaschinenlängsachse ausgerichtet. Hierdurch wird die Luft unter dem genannten Winkel in den Zylinder, bzw. Brennraum angesaugt und die Drallströmung ausgebildet. Dies gilt auch für den Fall, dass für jedes Einlass-Gaswechselventil ein eigener Luftzuführkanal vorgesehen wird. Da der Luftzuführkanal einstückig mit dem Zylinderkopf ist, ist eine einfache und kostengünstige Fertigung möglich.

Gemäß der Patentansprüche 5 und 6 ist die Längsachse des Benzineinspritzventils höchstens um 30° zu der Zylinderachse geneigt. Darüber hinaus ist die Einspritzöffnung derart ausgeformt, dass das Benzin bezüglich der Längsachse unter einem Winkel zwischen 0 und 60° in den Brennraum einspritzbar ist. Durch diese Ausgestaltung wird das Benzin in Richtung der Zylinderachse eingespritzt. Anschließend, beim Kompressionshub des Kolbens, wird das Brennstoff/Luft-Gemisch je nach Betriebszustand der Brennkraftmaschine entweder durch die Tumble- und/oder Drallladungsbewegung weiter vermischt, bzw. homogenisiert und vom Kolben in Richtung der weitgehend zentrisch angeordneten Zündeinrichtung transportiert. Dies führt zu einer sicheren Entzündung des Gemisches und zu einer stabilen Verbrennung.

Die Ausgestaltung gemäß der Patentansprüche 7 und 8 gewährleistet, dass bei weit geöffnetem Drosselorgan die angesaugte Luft im Zylinder, bzw. Brennraum eine Tumbleströmung ausbildet. Darüber hinaus ist mit dem vorgeschlagenen Winkel im Bereich von 5° bis 45° zwischen zwei benachbarten Einlassventilschäften und den korrespondierenden Auslassventilschäften ein sehr guter Füllgrad zu erreichen, sowie ein kompakter Brennraum mit geringem Oberflächen-Volumen-Verhältnis bei gleichzeitig hohem Verdichtungsverhältnis. Dementsprechend sind eine hohe Leistung, ein hohes Drehmoment, sowie sehr hohe Drehzahlen möglich.

Gemäß der Patentansprüche 9 und 10 weist der Zylinderkopf brennraumseitig zumindest eine Quetschfläche auf. Der Quetschflächenanteil beträgt hierbei bezogen auf die projizierte Zylinderquerschnittsfläche mindestens 2 % und höchstens 30 %, die sich auf einen einlassseitigen und einen auslassseitigen Quetschflächenanteil aufteilt. Der einlassseitige Quetschflächenanteil ist gemäß Patentanspruch 10 mindestens 60 % der gesamten Quetschfläche. Im Fall eines geschichteten Betriebszustandes wird mageres, aber durchbrennfähiges Kraftstoff-Luft-Gemisch vom Kolben in Richtung der Zündeinrichtung transportiert und das Durchbrennverhalten durch die Quetschflächen wesentlich verbessert. Durch diese Maßnahme kann die Brennkraftmaschine mit einem höheren Luftüberschuss betrieben werden, wodurch der Kraftstoffverbrauch gesenkt wird.

Da das Benzineinspritzventil von der Zündeinrichtung entfernt angeordnet ist, kann dieses mit einem Kühlmittel gemäß Patentanspruch 12 umspült und gekühlt werden. Durch diese Maßnahme wird in vorteilhafter Weise eine Überhitzung des Benzineinspritzventils sowie der Gaswechselventil-Stege, als auch der Zündeinrichtung vermieden. Ein Sieden des Benzins im Benzinzuführkanal des Benzineinspritzventils findet nicht statt, wodurch eine sehr exakte Zudosierung von Benzin zur angesaugten Luft möglich ist und ein Verkoken des Benzineinspritzventils vermieden wird.

Im Folgenden wird ein bevorzugtes Ausführungsbeispiel in vier Figuren näher erläutert.
- Fig. 1: zeigt schematisch eine dreidimensionale Aufsicht auf eine Brennraumseite eines Zylinderkopfes,
- Fig. 2: zeigt in einer zweidimensionalen Aufsicht die brennraumseitige Geometrie des Zylinderkopfes,
- Fig. 3: zeigt einen Schnitt durch den Zylinderkopf quer zu einer Brennkraftmaschinenlängsachse,
- Fig. 4: zeigt einen Schnitt durch den Zylinderkopf parallel zu einer Zylinderkopftrennebene.

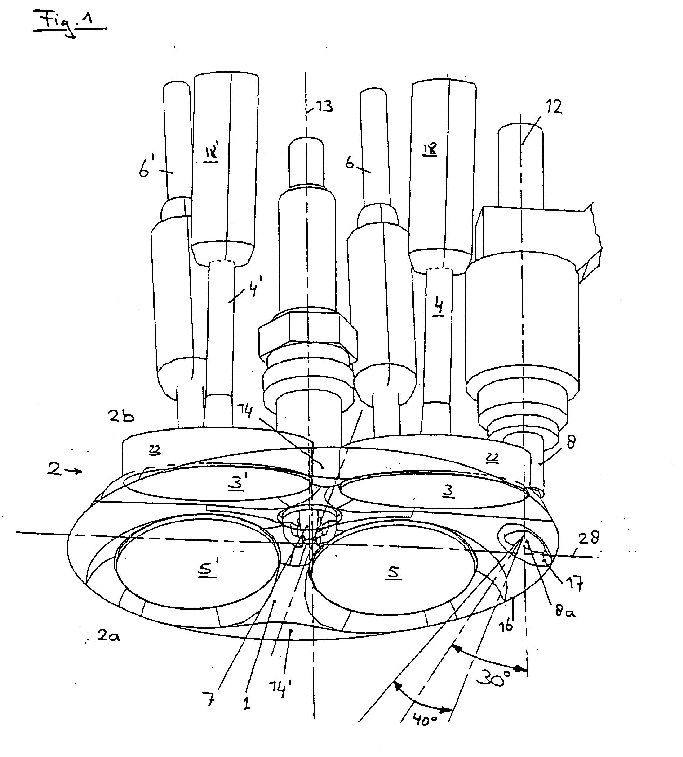

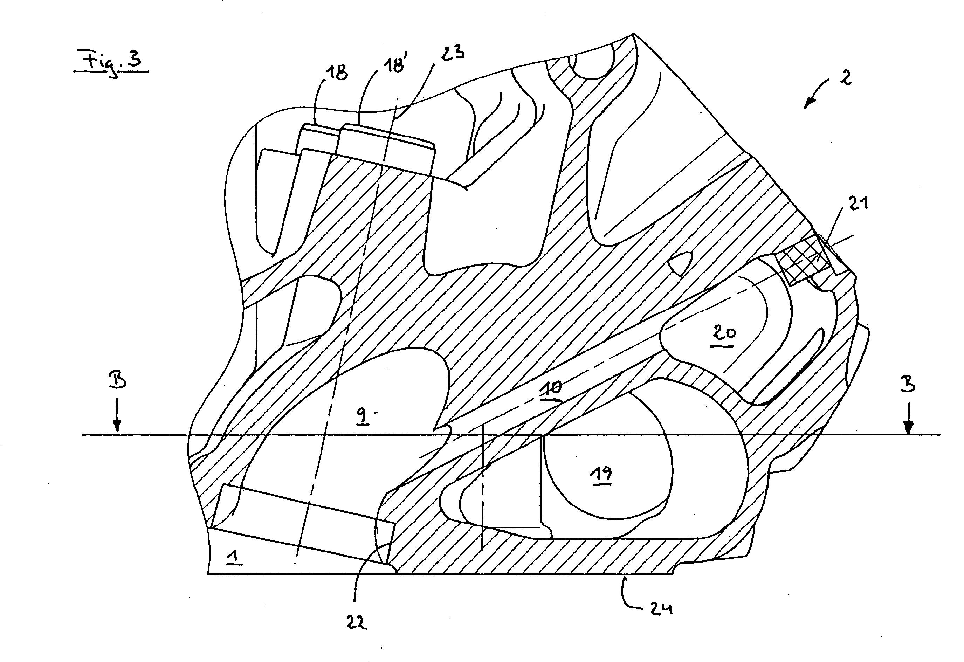

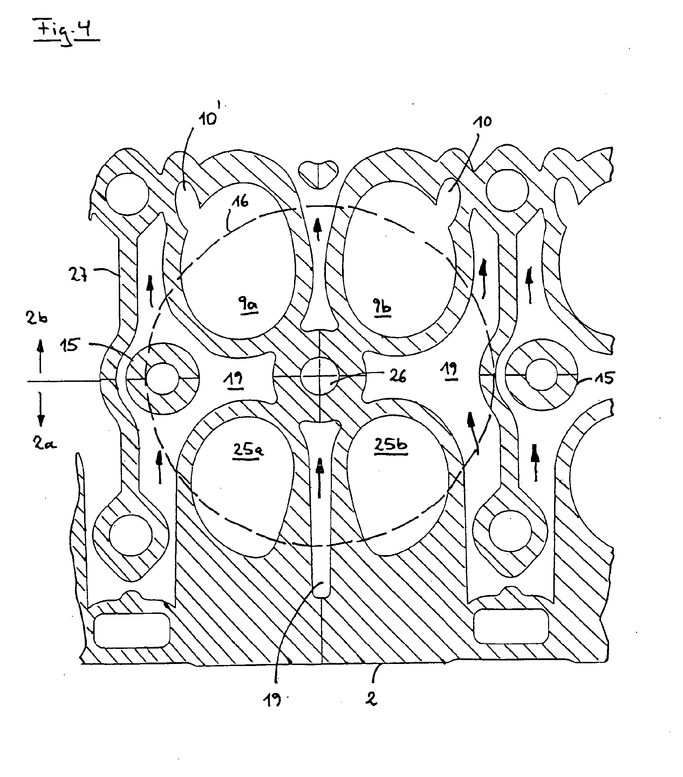

Fig. 1 zeigt schematisch eine dreidimensionale Ansicht einer Brennraumseite eines Zylinderkopfes 2. Die Bezugszeichen für gleiche Bauteile gelten für alle Figuren. In den Zylinderkopf 2 sind zwei hängende Einlass-Gaswechselventile 3, 3' mit jeweils einem Einlassventilschaft 4, 4' in einer Einlassseite 2a sowie zwei hängende Auslass-Gaswechselventile 5, 5' mit jeweils einem Auslassventilschäften 6, 6' in der Auslassseite 2b angeordnet sind. Die korrespondierenden Einlass- und Auslassventilschäfte 3, 3' und 4, 4', stehen zueinander in einem Winkel von 20°. Die Auslass-Gaswechselventile 5, 5' verschließen einen nicht dargestellten Auslasskanal für die Abgase. Die Einlass-Gaswechselventile 3, 3' verschließen einen in Fig. 3 und Fig. 4 dargestellten Einlasskanal 9. In den Einlasskanal 9 münden zwei aus Fig. 3 und 4 ersichtliche Luftzuführkanäle 10, 10'. Zwischen den Einlass- und Auslass-Gaswechselventilen 3, 3' und 5, 5' ist eine Zündeinrichtung 7 angeordnet, eine Dreimassenelektroden-Zündkerze. Die Einlassventilschäfte 4, 4' und die Auslassventilschäfte 6, 6' spannen jeweils eine Ebene auf, die zu einer Brennkraftmaschinenlängsachse 28 parallel ausgerichtet ist. Die Brennkraftmaschinenlängsachse 28 erstreckt sich zwischen den korrespondierenden Einlass-Gaswechselventilen 3, 3' und den korrespondieren Auslass-Gaswechselventilen 5, 5'. Radial abgeschlossen wird der Brennraum 1 durch eine Zylinderlaufbuchse, schematisch dargestellt durch eine Zylinderbegrenzung 16. Zwischen dem Einlass-Gaswechselventil 3 und dem Auslass-Gaswechselventil 5 ist sieben mm von der Zylinderbegrenzung 16 in Richtung Zündeinrichtung 7 beabstandet, ein Benzineinspritzventil 8 angeordnet.

Eine Längsachse 12 des Benzineinspritzventils 8 ist parallel zu einer Zylinderachse 13 ausgerichtet. Eine Einspritzöffnung 8a des Benzineinspritzventils 8 bildet mit der Zylinderachse 13 einen Winkel von 30° und spritzt das Benzin mit einem Kegelwinkel von 40° in Richtung der Zylinderachse 13 in den Zylinder, bzw. Brennraum ein. Zwischen den Einlass-Gaswechselventilen 3, 3' ist im Bereich der Zylinderbegrenzung 16 eine Quetschfläche 14, zwischen den Auslass-Gaswechselventilen 5, 5' ist eine Quetschfläche 14', die vom Zylinderkopf 2 gebildet wird. Der Gesamtflächenanteil der Quetschflächen 14, 14' beträgt 15 % einer projizierten Zylinderquerschnittsfläche. Die Quetschflächenverteilung zwischen Einlassseite 2a und Auslassseite 2b beträgt 80 % zu 20 %. Der Brennraum ist in ein zylinderkopfseitiges und ein kolbenseitiges Volumen aufgeteilt. Der zylinderkopfseitige Volumenanteil ist der Volumenanteil, der oberhalb einer Zylinderkopftrennebene entsteht, wenn der Kolben in seinem mechanischen oberen Totpunkt eingestellt ist. Die Zylinderkopftrennebene entspricht einer kurbelgehäuseseitigen Fläche einer Dichtung. Der kolbenseitige Volumenanteil kann auch den Wert Null annehmen, wenn die brennraumseitige Kolbenoberfläche den oberen Totpunkt vollständig überstreicht, sodass kein kolbenseitiges Volumen mehr unter der Zylinderkopftrennebene verbleibt. Ein zylinderkopfseitiger Volumenanteil am Brennraums beträgt im Ausführungsbeispiel 70 %. Das Durchmesserverhältnis der Einlass-Gaswechselventile 3, 3' zu den Auslass-Gaswechselventilen 5, 5' beträgt 1,2. Das Durchmesserverhältnis eines Einlass-Gaswechselventils 3, 3' zu der Zylinderbegrenzung 16 beträgt 0,4. Der Einlasskanal 9 ist in Verbindung mit den Einlass-Gaswechselventilen 3, 3' derart ausgebildet, dass er bei geöffneter, nicht dargestellter Drosselklappe im Zylinder eine Tumbleströmung ausbildet. Unter Tumbleströmung wird eine Luftwalze verstanden, die sich weitgehend senkrecht zur Zylinderachse 13 ausbildet. Die in Fig. 1 nicht dargestellten Luftzuführkanäle 10 bilden mit der Brennkraftmaschinenlängsachse 28 einen Winkel von 45°. Durch diese Anordnung wird bei geringer Last bzw. geringer Drehzahl, bei geschlossener Drosselklappe, im Zylinder eine Drallströmung erzeugt. Unter Drallströmung wird eine Luftwalze im Zylinder verstanden, deren Achse weitgehend in Richtung der Zylinderachse 13 ausgerichtet ist.

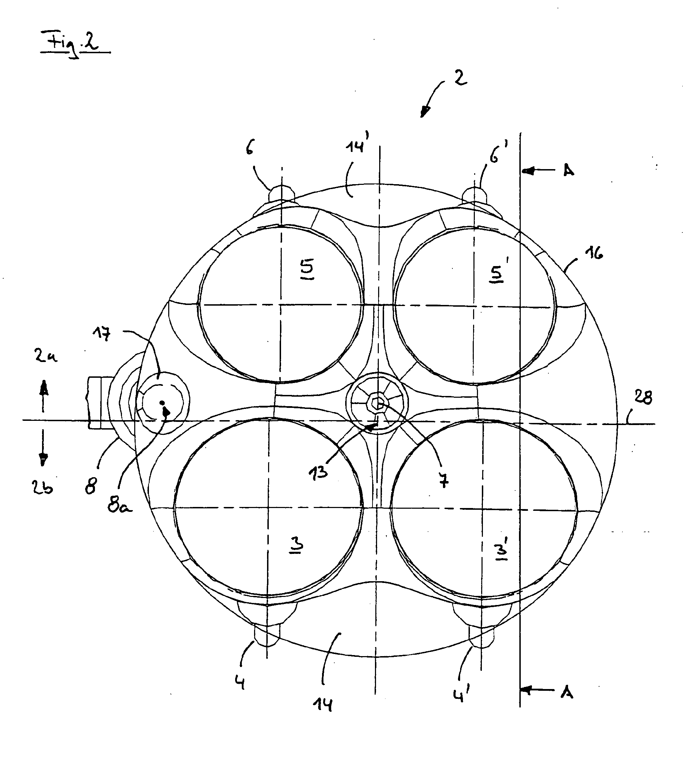

In Fig. 2 ist eine Aufsicht der Brennraumseite des Zylinderkopfes 2 dargestellt. Die Anordnung der einzelnen Bauteile entspricht der Ausführung zu Fig. 1. Innerhalb der Zylinderbegrenzung 16 sind die Einlass-Gaswechselventile 3, 3' sowie die Auslass-Gaswechselventile 5, 5' erkennbar. Zwischen den Gaswechselventilen 3, 3', 5, 5', ist die Zündeinrichtung 7, die gegenüber der Zylinderachse 13 auslassseitig verschoben ist. Zwischen dem Einlass-Gaswechselventil 3 und dem Auslass-Gaswechselventil 5 ist das Benzineinspritzventil 8, sieben mm von der Zylinderbegrenzung 16 entfernt angeordnet, es kann aber auch bis zum halben Radius der Zylinderbegrenzung 16 von dieser entfernt sein. Die Einspritzöffnung 8a ist durch einen Punkt dargestellt und gegenüber der Brennraumoberfläche in einer Ausbuchtung 17 zurückgesetzt. Radial um die Gaswechselventile, 3, 3', 5, 5' sind flächenbegrenzende Strukturen schematisch durch Linien dargestellt. Einlassseitig und auslassseitig zwischen den Einlass-Gaswechselventilen 3, 3' und den Auslass-Gaswechselventilen 5, 5' sind die Quetschflächen 14, 14' erkennbar. Senkrecht zur Brennkraftmaschinenlängsachse 28 ist über die Gaswechselventile 3' und 5' ein Schnitt A-A eingezeichnet, der in Fig. 3 dargestellt ist.

Fig. 3 zeigt den Schnitt entlang der Linie A-A aus Fig. 2 durch die Einlassseite 2b des Zylinderkopfes 2. Die Schnittflächen des Zylinderkopfes 2 sind schraffiert. Stellvertretend für das Einlass-Gaswechselventil 3 ist dessen Ventillängsachse 23 strichpunktiert in einer Ventilschaftführung 18 dargestellt, dahinter ist eine Ventilschaftführung 18' für das Einlass-Gaswechselventil 3' erkennbar. Ausgehend von der Ventilschaftführung 18' mündet die Ventilachse 23 im Brennraum 1, der zylinderkopfseitig von einem Ventilsitzring 22 abgeschlossen ist. Auf der dem Brennraum 1 gegenüberliegenden Seite des Ventilsitzringes 22 ist der Einlasskanal 9 erkennbar. In den Einlasskanal 9 mündet der Luftzuführkanal 10. Der Luftzuführkanal 10 ist derart ausgerichtet, dass er Luft in Richtung eines nicht dargestellten Ventilspaltes, der sich beim Öffnen des Einlass-Gaswechselventils 3' ausbildet, leitet. Gespeist wird der Luftzuführkanal 10 aus einem Luftsammelkanal 20, der von dem Zylinderkopf 2 gebildet ist. Der Luftzuführkanal 10 und der Luftsammelkanal 20 sind integrale Bestandteile von dem Zylinderkopf 2. Der Luftsammelkanal 20 ist über ein Verschlusselement 21, einer Schraube, gegenüber der Umgebungsluft verschlossen, damit ausschließlich Luft aus einem Luftansaugsystem angesaugt wird. Umschlossen von Brennraum 1, Einlasskanal 9, Luftzuführkanal 10 und Luftsammelkanal 20 befindet sich ein Kühlmittelkanal 19, der Teil eines komplexen Kühlmittelmantels im Zylinderkopf 2 ist. Parallel zu einer Zylinderkopftrennebene 24, die den Zylinderkopf 2 von einem nicht dargestellten Kurbelgehäuse trennt, ist ein Schnitt B-B eingezeichnet, der im Folgenden zu Fig. 4 näher erläutert ist.

Fig. 4 zeigt den Schnitt B-B durch den Zylinderkopf 2, die Schnittoberflächen sind schraffiert. Die Einlass- und Auslass-Gaswechselventile 3, 3' und 5, 5' sind nicht dargestellt. In etwa zentrisch von Fig. 4 ist eine Bohrung 26 für die Zündeinrichtung 7. Radial um die Zündeinrichtung 7 erstreckt sich die gestrichelt dargestellte Zylinderbegrenzung 16 des zugehörigen Zylinders. Einlassseitig und auslassseitig der Bohrung 26 erstreckt sich der Kühlmittelkanal 19 im Wesentlichen senkrecht zur Brennkraftmaschinenlängsachse 28. Beidseitig des Kühlmittelkanals 19 ist auf der Einlassseite 2b der in diesem Schnitt geteilte in zwei Teil-Einlasskanäle 9a, 9b geteilte Einlasskanal 9 und auf der Auslassseite 2a der ebenfalls in diesem Schnitt in zwei Teil-Auslasskanäle 25a, 25b geteilte Auslasskanal erkennbar. In jeden Teil-Einlasskanal 9a, 9b mündet ein Luftzuführkanal 10, 10'. Der Kühlmittelkanal 19 erstreckt sich ferner beidseitig von dem Einlasskanal 25 und dem Auslasskanal und wird von der Auslassseite 2a in Richtung Einlassseite 2b, dargestellt durch Pfeile, von einem Kühlmittel durchströmt. Zwischen dem Teil-Einlasskanal 9a und dem Teil-Auslasskanal 25a ist eine vom Zylinderkopf 2 gebildete Hülse 15 geschnitten dargestellt, die das Benzineinspritzventil 8 aufnimmt. Die Hülse 15 ist von Kühlmittel umströmt. Um die Kühlung der Hülse 15 zu verbessern ist zwischen dieser und einem angrenzenden Zylinder noch ein Leitelement 27, das sich von der Auslassseite 2a in Richtung Einlassseite 2b erstreckt, angeordnet. Alle geschnittenen Kühlmittelkanäle 19 sind, wie bereits zu Fig. 3 erläutert, Teil eines komplexen Kühlmittelmantels.

Abweichend von dem Ausführungsbeispiel kann
- der Luftzuführkanal 10 mit der Brennkraftmaschinenlängsachse 28 auch einen Winkel zwischen 45° und 90° bilden;
- die Längsachse 12 des Benzineinspritzventils 8 zur Zylinderachse 13 auch bis zu einem Winkel von 30°geneigt sein;
- die Einspritzöffnung 8a auch derart ausgeformt sein, dass sie das Benzin bezüglich der Längsachse 12 in einem Winkel zwischen 0 und 60° in den Brennraum einspritzt;
- der Kegelwinkel des eingespritzten Benzins zwischen 10 und 80° betragen;
- abhängig von der Geometrie des Einlasskanals 9 der Einlassventilschaft 4, 4' mit einem korrespondierenden Auslassventilschaft 6, 6' einen Winkel zwischen 5° und 45° bilden;
- der Quetschflächenanteil an der projizierten Zylinderquerschnittsfläche zwischen 2% und 30 % betragen, wobei der einlassseitige Quetschflächenanteil mindestens 60 % der gesamten Quetschfläche beträgt;
- der zylinderkopfseitige Volumenanteil am Brennraum mindestens 60 % beträgt;
- das Durchmesserverhältnis eines Einlass-Gaswechselventils 3, 3' zu einem Auslass-Gaswechselventil 5, 5' zwischen 1 und 1,3 variieren;
- das Durchmesserverhältnis des Einlass-Gaswechselventils 3, 3' zu dem Zylinderdurchmesser zwischen 0,3 und 0,5 liegen;
- eine Turboaufladung vorgesehen werden;
- eine andere Zündeinrichtung, wie beispielsweise eine Einelektroden-Zündeinrichtung oder eine Plasma-Zündeinrichtung und/oder eine zweite Zündeinrichtung vorgesehen werden.

Die erfindungsgemäße Ausgestaltung des Zylinderkopfes 2 zeigt keine Kompromisse bei der Auslegung des Einlasskanals 9 und des Auslasskanals für Hochleistungsmotoren mit einer Literleistung > 65 kW.

Beim Betrieb der Brennkraftmaschine wird Luft von einem Kolben sowohl durch den Einlasskanal 9 als auch durch den Luftzuführkanal 10 angesaugt. Je größer Drehzahl bzw. Last der Brennkraftmaschine ist, desto weiter ist das Drosselorgan, die Drosselklappe, geöffnet. Dies bedeutet, dass bei diesen Betriebszuständen die Ansaugluft primär durch den Einlasskanal 9 angesaugt wird, während bei geringen Drehzahlen und geringer Leistung die Drosselklappe geschlossen ist und die Luft primär durch den Luftzuführkanal 10 angesaugt wird. Bei Ansaugung der Ansaugluft durch den Einlasskanal 9 bildet sich im Zylinder eine Tumbleströmung aus, während sich bei Luftansaugung primär durch den Luftzuführkanal 10 eine Drallströmung im Zylinder ausbildet. Eine aktive Beeinflussung des Ventiltriebes ist für die unterschiedlichen Betriebsvarianten nicht notwendig.

### Bezugszeichenliste

- 1: Brennraum
- 2: Zylinderkopf
- 2a: Auslassseite
- 2b: Einlassseite
- 3, 3': Einlass-Gaswechselventil
- 4, 4': Einlassventilschaft
- 5, 5': Auslass-Gaswechselventil
- 6, 6': Auslassventilschaft
- 7: Zündeinrichtung
- 8: Benzineinspritzventil
- 8a: Einspritzöffnung
- 9: Einlasskanal
- 9a, 9b: Teil-Einlasskanal
- 10, 10': Luftzuführkanal
- 11: Ventilspalt
- 12: Längsachse
- 13: Zylinderachse
- 14, 14': Quetschfläche
- 15: Hülse
- 16: Zylinderbegrenzung
- 17: Ausbuchtung
- 18, 18': Ventilschaftführung
- 19: Kühlmittelkanal
- 20: Luftsammelkanal
- 21: Verschlusselement
- 22: Ventilsitzring
- 23: Einlass-Gaswechselventillängsachse
- 24: Zylinderkopftrennebene
- 25a, 25b: Teil-Auslasskanal
- 26: Bohrung
- 27: Leitelement
- 28: Brennkraftmaschinenlängsachse

## Patentansprüche

1. Hubkolben-Brennkraftmaschine mit zumindest einem Brennraum (1) mit Benzin-Direkteinspritzung, der radial von einem Zylinder begrenzt ist
und mit einem Zylinderkopf (2), der
- zwei Einlass-Gaswechselventile (3, 3') mit jeweils einem Einlass-Ventilschaft (4, 4'),
- zwei Auslass-Gaswechselventile (5,5') mit jeweils einem Auslass-Ventilschaft (6, 6'),
- eine zwischen den Gaswechselventilen angeordnete Zündeinrichtung (7),
- ein zwischen einem Einlass- (3, 3') und einem Auslass-Gaswechselventil (5, 5') angeordnetes Benzineinspritzventil (8),
- einen zumindest abschnittsweise für die Einlass-Gaswechseiventile (3, 3') gemeinsamen Einlasskanal (9) für Ansaugluft aufweist,
**dadurch gekennzeichnet, dass**
- die Einfass-Ventilschäfte (4, 4') und die Auslass-Ventilschäfte (6, 6') jeweils eine Ebene aufspannen, die weitgehend parallel zu einer Brennkraftmaschinen-Längsachse ausgerichtet sind,
- in den Einlasskanal (9) zumindest ein zusätzlicher Luftzuführkanal (10) mündet und
- eine Einspritzöffnung (8a) des Benzineinspritzventils (8) mindestens einen halben Zylinderradius von der Zündeinrichtung (7) entfernt ist.

2. Hubkolben-Brennkraftmaschine nach Patentanspruch 1, wobei während eines Ladungswechsels ein Ventilspalt zwischen dem Zylinderkopf und dem Einlass-Gaswechselventil ausgebildet ist,
**dadurch gekennzeichnet, dass** der Luftzuführkanal (10) Ansaugluft derart in Richtung Ventilspalt (11) leitet, dass im Zylinder eine Drallströmung erzeugt wird.

3. Hubkolben-Brennkraftmaschine nach Patentanspruch 1 oder 2,
**dadurch gekennzeichnet, dass** der Luftzuführkanal (10) einstückig mit dem Zylinderkopf (2) ist .

4. Hubkolben-Brennkraftmaschine nach einem der Patentansprüche 1 bis 3,
**dadurch gekennzeichnet, dass** der Luftzuführkanal (10) mit der Brennkraftmaschinen-Längsachse einen Winkel zwischen 45° und 90° bildet.

5. Hubkolben-Brennkraftmaschine nach einem der Patentansprüche 1 bis 4,
**dadurch gekennzeichnet, dass** eine Längsachse (12) des Benzineinspritzventils (8) des höchstens um 30° zu einer Zylinderachse (13) geneigt ist.

6. Hubkolben-Brennkraftmaschine nach Patentanspruch 5,
**dadurch gekennzeichnet, dass** die Einspritzöffnung (8a) derart ausgeformt ist, dass das Benzin bezüglich der Längsachse (12) unter einem Winkel zwischen 0° und 60° in den Brennraum einspritzbar ist.

7. Hubkolben-Brennkraftmaschine nach einem der zuvor genannten Patentansprüche,
**dadurch gekennzeichnet, dass** die Einlass-Gaswechselventile (3, 3') derart in dem Einlasskanal (9) angeordnet sind, dass im Zylinder eine Tumble-Strömung erzeugt wird.

8. Hubkolben-Brennkraftmaschine nach Patentanspruch 7,
**dadurch gekennzeichnet, dass** ein Einlass-Ventilschaft (4, 4') mit einem benachbarten Auslass-Ventilschaft (6, 6') einen Winkel zwischen 5° und 45° bildet.

9. Hubkolben-Brennkraftmaschine nach einem der zuvor genannten Patentansprüche, wobei der Zylinderkopf brennraumseitig zumindest eine Quetschfläche aufweist,
**dadurch gekennzeichnet, dass** der Flächenanteil der Quetschfläche (14, 14') mindestens 2 % und höchstens 30% von einer projizierten Zylinderquerschnittsfläche beträgt.

10. Hubkolben-Brennkraftmaschine nach Patentanspruch 9, wobei die Quetschfläche in eine einlassseitige und eine auslassseitige Quetschfläche aufgeteilt ist,
**dadurch gekennzeichnet, dass** der einlassseitige Quetschflächenanteil (14) mindestens 60 % der gesamten Quetschfläche beträgt.

11. Hubkolben-Brennkraftmaschine nach einem der zuvor genannten Patentansprüche, wobei der Brennraum in ein zylinderkopfseitiges und ein kolbenseitiges Volumen aufgeteilt ist,
**dadurch gekennzeichnet, dass** der zylinderkopfseitige Volumenanteil mindestens 60% des Brennraumvolumens ist.

12. Hubkolben-Brennkraftmaschine nach einem der zuvor genannten Patentansprüche, wobei das Benzineinspritzventil in einer vom Zylinderkopf gebildeten Hülse verbaut ist,
**dadurch gekennzeichnet, dass** die Hülse von einem Kühlmittel umspült ist.

## Claims

1. A reciprocating engine comprising at least one combustion chamber (1) with direct fuel injection, radially bounded by a cylinder, and comprising a cylinder head (2) with
- two intake gas change valves(3,3'), each with an intake valve shank (4,4'),
- two exhaust gas change valves(5,5'), each with an exhaust valve shank(6,6'),
- an ignition device (7) disposed between the gas change valves,
- a fuel injection valve (8) disposed between an intake (3,3') and an exhaust (5,5') gas change valve,
- an intake port (9) for intake air, at least in part common to the intake gas change valves (3,3')
**characterised in that**
- the intake valve shanks (4,4') and the exhaust valve shanks (6,6') each span a plane aligned substantially parallel with a longitudinal axis of the internal combustion engine and
- at least one additional air intake port (10) opens into the intake port (9), and
- an injection opening (8a) of the fuel injection valve (8) is at a distance of at least half a cylinder radius from the ignition device (7).

2. A reciprocating engine according to claim 1, wherein during a change of charge a valve gap is formed between the cylinder head and the intake gas change valve,
**characterised in that** the air supply duct (10) conveys intake air towards the valve gap (11) so as to produce a swirl flow in the cylinder.

3. A reciprocating engine according to claim 1 or claim 2,
**characterised in that** the air supply port (10) is integral with the cylinder head (2).

4. A reciprocating engine according to any of claims 1 to claim3,
**characterised in that** the air supply port (10) is at an angle of 45° to 90° to the longitudinal axis of the internal combustion engine.

5. A reciprocating engine according to any of claims 1 to 4,
**characterised in that** a longitudinal axis (12) of the fuel injection valve (8) is at an angle of not more than 30°to a cylinder axis (13).

6. A reciprocating engine according to claim 5,
**characterised in that** the injection opening (8a) is shaped so that petrol is injectable into the combustion chamber at an angle between 0° and 60° relative to the longitudinal axis (12).

7. A reciprocating engine according to any of the preceding claims,
**characterised in that** the intake gas change valves (3, 3') are disposed in the intake port (9) so as to produce a tumble flow in the cylinder.

8. A reciprocating engine according to claim 7,
**characterised in that** an intake valve shank (4, 4') is at an angle of 5° to 45° to aneighbouring exhaust valve shank (6, 6').

9. A reciprocating engine according to any of the preceding claims, wherein the cylinder head, on the combustion-chamber side, has at least one compression surface,
**characterised in that** the compression surface area (14, 14') makes up at least 2% and at most 30% of a projected cylinder cross-sectional area.

10. A reciprocating engine according to claim 9, wherein the compression surface is divided into an area on the intake side and an area on the exhaust side,
**characterised in that** the intake-side part (14) is equal to at least 60% of the total compression surface area.

11. A reciprocating engine according to any of the previous claims, wherein the combustion chamber is divided into a space on the cylinder-head side and a space on the piston side,
**characterised in that** the cylinder-head side part makes up at least 60% of the combustion-chamber volume.

12. A reciprocating engine according to any of the preceding claims, wherein the petrol injection valve is installed in a sleeve formed by the cylinder head,
**characterised in that** the sleeve is immersed in a coolant.

## Revendications

1. Moteur à combustion à pistons linéaires, comportant au moins une chambre de combustion (1) à injection directe d'essence, cette chambre délimitée radialement par un cylindre ayant une culasse (2) et comprenant :
- deux soupapes d'échange de gaz d'admission (3, 3') ayant chacune une tige (4, 4'),
- deux soupapes d'échange de gaz d'échappement (5, 5') ayant chacune une tige (6, 6'),
- une installation d'allumage (7) entre les soupapes d'échange de gaz,
- un injecteur d'essence (8) entre une soupape d'échange de gaz d'admission (3, 3') et une soupape d'échappement (5, 5'),
- un canal d'admission (9) d'air, commun au moins par segment, aux soupapes d'échange de gaz d'admission (3, 3'),
**caractérisé en ce que**
- les tiges (4, 4') des soupapes d'admission et les tiges (6, 6') des soupapes d'échappement sous-tendent un plan pratiquement parallèle à l'axe longitudinal du moteur,
- le canal d'admission (9) débouche dans un canal complémentaire d'alimentation en air (10), et
- l'orifice d'injection (8a) de l'injecteur d'essence (8) est écarté de l'installation d'allumage (7) au moins d'un demi-rayon de cylindre.

2. Moteur à combustion à pistons linéaires selon la revendication 1, selon lequel
au moins pendant un changement de charge, on a un intervalle de cylindre entre la culasse et la soupape d'échange de gaz d'admission,
**caractérisé en ce que**
le canal d'alimentation en air (10) conduit l'air d'admission en direction de l'intervalle de soupape (11) de façon à générer un écoulement tournant dans le cylindre.

3. Moteur à combustion à pistons linéaires selon la revendication 1 ou 2,
**caractérisé en ce que**
le canal d'alimentation en air (10) fait corps avec la culasse (2).

4. Moteur à combustion à pistons linéaires selon les revendications 1 à 3,
**caractérisé en ce que**
le canal d'alimentation en air (10) forme un angle compris entre 45° et 90° avec l'axe longitudinal du moteur à combustion.

5. Moteur à combustion à pistons linéaires selon les revendications 1 à 4,
**caractérisé en ce que**
l'axe longitudinal (12) de l'injecteur de carburant (8) est incliné au maximum de 30° par rapport à l'axe (13) du cylindre.

6. Moteur à combustion à pistons linéaires selon la revendication 5,
**caractérisé en ce que**
l'orifice d'injection (8a) est formé pour que le carburant soit injecté dans la chambre de combustion selon un angle compris entre 0° et 60° par rapport à l'axe longitudinal (12).

7. Moteur à combustion à pistons linéaires selon les revendications précédentes,
**caractérisé en ce que**
les soupapes d'échange de gaz d'admission (3, 3') sont installées dans le canal d'admission (9) pour générer un écoulement agité dans le cylindre.

8. Moteur à combustion à pistons linéaires selon la revendication 7,
**caractérisé en ce qu'**
une tige (4, 4') de soupape d'admission fait avec la tige (6, 6') voisine de la soupape d'échappement un angle compris entre 5° et 45°.

9. Moteur à combustion à pistons linéaires selon les revendications précédentes, selon lequel du côté de la chambre de combustion, la culasse comporte au moins une surface d'écrasement,
**caractérisé en ce que**
la proportion de la surface d'écrasement (14, 14') représente au moins 2 % et au maximum 30 % de la projection de la section d'un cylindre.

10. Moteur à combustion à pistons linéaires selon la revendication 9, selon lequel la surface d'écrasement est divisée en une surface d'écrasement côté admission et une surface d'écrasement côté échappement,
**caractérisé en ce que**
la partie de la surface d'écrasement (14) côté admission représente au moins 60 % de l'ensemble de la surface d'écrasement.

11. Moteur à combustion à pistons linéaires selon les revendications précédentes, selon lequel la chambre de combustion est répartie en un volume côté culasse et un volume côté piston,
**caractérisé en ce que**
la partie de volume côté cylindre représente au moins 60 % du volume de la chambre de combustion.

12. Moteur à combustion à pistons linéaires selon les revendications précédentes, selon lequel l'injecteur de carburant est monté dans un manchon formé par la culasse,
**caractérisé en ce que**
le manchon est balayé par un agent de refroidissement.
